# EUROPEAN PATENT APPLICATION

(11) **EP 2 187 370 A1**
(43) Date of publication of application: **19.05.2010**
(21) Application number: 09175803.7
(22) Date of filing: 12.11.2009
(51) Int. Cl.: G08G 1/0962, G08G 1/16, A61G 5/00, G01C 21/20, A61G 5/04, B60Q 1/52

(54) **Monitoring system for low-speed mobility vehicle and another type of vehicle**

(30) Priority: 14.11.2008 JP 2008292615
(71) Applicant: Honda Motor Co., Ltd., Tokyo 107-8556 (JP)
(72) Inventor: Yamamura, Makoto, Saitama 351-0193 (JP); Masubuchi, Yoshinori, Saitama 351-0193 (JP); Kanke, Hiroo, Saitama 351-0193 (JP)
(74) Representative: Herzog, Markus

(57) **Abstract**

In a monitoring system of a power wheelchair (low-speed mobility vehicle 12) and an automobile (vehicle of different type 14) having a remote monitoring device (16) connected to them through a first communicator (46), each of the wheelchair and automobile includes a first transmitter (42, 72) transmitting location data to the remote monitoring device through the first communicator, and the remote monitoring device calculates an inter-vehicle distance between the wheelchair (12) and automobile (14) based on the location data and transmits an approaching signal indicating that they are approaching each other when the inter-vehicle distance is equal to or less than a first predetermined value, thereby reducing the driving burden on the operators and enhances driving safety.

## Description

### BACKGROUND OF THE INVENTION

### Field of the Invention

This invention relates to a monitoring system for a low-speed mobility vehicle and another or different type of vehicle, particularly to a monitoring system for vehicles including a low-speed mobility vehicle, such as a power wheelchair, and a vehicle of a different type from the low-speed mobility vehicle, such as a four-wheeled vehicle (automobile).

### Description of the Related Art

Various efforts have been made to improve the driving safety of four-wheeled vehicle and the like. For example, Japanese Laid-Open Patent Application No. 2008-27170 ('170) teaches a vehicle monitoring system that is equipped with a remote monitoring device communicatably connected to a vehicle and a device provided at an intersection or the like for detecting pedestrians and is configured so that the remote monitoring device alerts the vehicle when a pedestrian is detected in the vicinity of the vehicle.

On the other hand, recent years have seen the spread of low-speed mobility vehicles such as power wheelchairs that travel at very low speeds comparable to human walking speed and are suitable for use by the elderly and others with walking difficulties. An example can be found in Japanese Laid-Open Patent Application No. 2007-112363 ('363).

The operator (driver) of a low-speed mobility vehicle of this type must keep a close and constant lookout for approaching vehicles. The operator therefore experiences a considerable burden and much inconvenience particularly when driving in heavy-traffic environments such as a city. A conceivable way of making the vehicle monitoring system capable of reducing the burden on the operator would be to inform and alert both the low-speed mobility vehicle and the other vehicle when they approach one another. However, the references '170 and '363 are both totally silent on this point.

### SUMMARY OF THE INVENTION

The object of this invention is therefore to overcome this drawback by providing a monitoring system for a low-speed mobility vehicle and a different type of vehicle, which comprises the low-speed mobility vehicle and a vehicle of a different type, reduces the driving burden on the operators and enhances driving safety.

In order to achieve the object, this invention provides a system for monitoring a low-speed mobility vehicle and a vehicle of different type from the low-speed mobility vehicle, and having a remote monitoring device adapted to be connected to the low-speed mobility vehicle and the vehicle of different type through a first communicator, wherein the improvement comprises: each of the low-speed mobility vehicle and the vehicle of different type includes: a first transmitter that transmits vehicle location data to the remote monitoring device through the first communicator; and the remote monitoring device includes: a first distance calculator that calculates an inter-vehicle distance between the low-speed mobility vehicle and the vehicle of different type based on the vehicle location data transmitted from the low-speed mobility vehicle and the vehicle of different type; and a second transmitter that transmits an approaching signal to the low-speed mobility vehicle and the vehicle of different type through the first communicator indicating that the vehicles are approaching each other when the inter-vehicle distance calculated by the first distance calculator is equal to or less than a first predetermined value.

### BRIEF DESCRIPTION OF THE DRAWINGS

The above and other objects and advantages of the invention will be more apparent from the following description and drawings in which:
FIG. 1 is a block diagram showing the overall configuration of a monitoring system for a low-speed mobility vehicle and a different type of vehicle according to an embodiment of this invention;
FIG. 2 is a perspective view of the low-speed mobility vehicle shown in FIG. 1 as seen at an angle from the front;
FIG. 3 is a perspective view of the low-speed mobility vehicle shown in FIG. 1 as seen at an angle from the rear;
FIG. 4 is an enlarged plan view of an operating unit of the low-speed mobility vehicle shown in FIG. 2, etc.;
FIG. 5 is a flowchart showing the operation of a remote monitoring device shown in FIG. 1;
FIG. 6 is a flowchart showing the operation of the low-speed mobility vehicle shown in FIG. 1; and
FIG. 7 is a flowchart showing the operation of a vehicle shown in FIG. 1.

### DETAILED DESCRIPTION OF THE PREFERRED EMBODIMENT

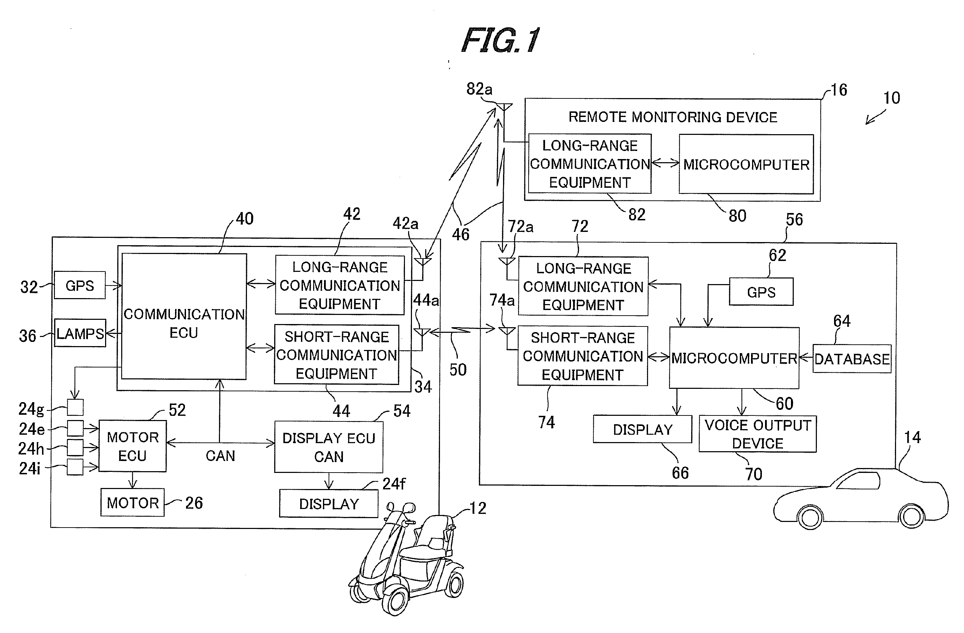

FIG. 1 is a block diagram showing the overall configuration of a monitoring system for a low-speed mobility vehicle and a different type of vehicle in accordance with an embodiment of this invention.

In FIG. 1, the reference numeral 10 designates the monitoring system for a low-speed mobility vehicle and a different type of vehicle. The monitoring system 10 comprises a low-speed mobility vehicle 12, a vehicle (e.g., four-wheeled vehicle) 14 of a different type from the low-speed mobility vehicle, and a remote monitoring device 16 communicatably connected to the low-speed mobility vehicle 12 and vehicle 14.

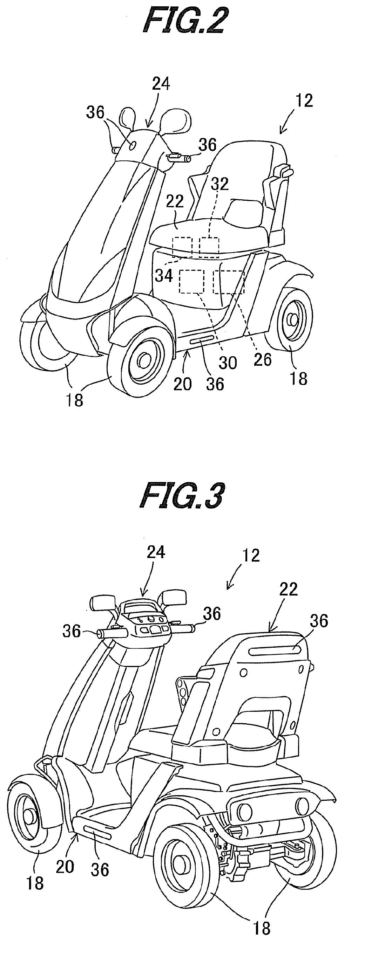

FIG. 2 is a perspective view of the low-speed mobility vehicle 12 as seen at an angle from the front, and FIG. 3 is a perspective view thereof as seen at an angle from the rear.

As shown in FIGs. 2 and 3, the low-speed mobility vehicle 12 comprises a vehicle body frame 20 supported by four wheels 18, a seat 22 provided on the body frame 20 to be seated by an operator (rider/user) not shown in the drawings, and an operating unit 24 provided for manual operation by the operator. The low-speed mobility vehicle 12 is designed for use by, for example, an elderly person. It is a relatively small, single-passenger electrically powered vehicle that travels at a very low speed comparable to human walking speed. As it is in essence a power wheelchair, the low-speed mobility vehicle 12 will hereinafter sometimes be called the "power wheelchair 12."

Under the seat 22 are installed an electric motor 26 for driving the (rear) wheels 18 and a battery 30 for supplying operating power to the motor 26 or the like. The motor 26 and battery 30 are shown only in FIG. 2. The motor 26 is a DC brushless motor.

Between the seat 22 and body frame 20 are installed a GPS signal receiver 32 for receiving GPS (Global Positioning System) signals and a communication unit 34 communicatably connected to the remote monitoring device 16. The GPS signal receiver 32 and communication unit 34 are shown only in FIG. 2. The GPS signal receiver 32 produces an output or signal representing location data and the like regarding the power wheelchair 12 acquired from the GPS signals.

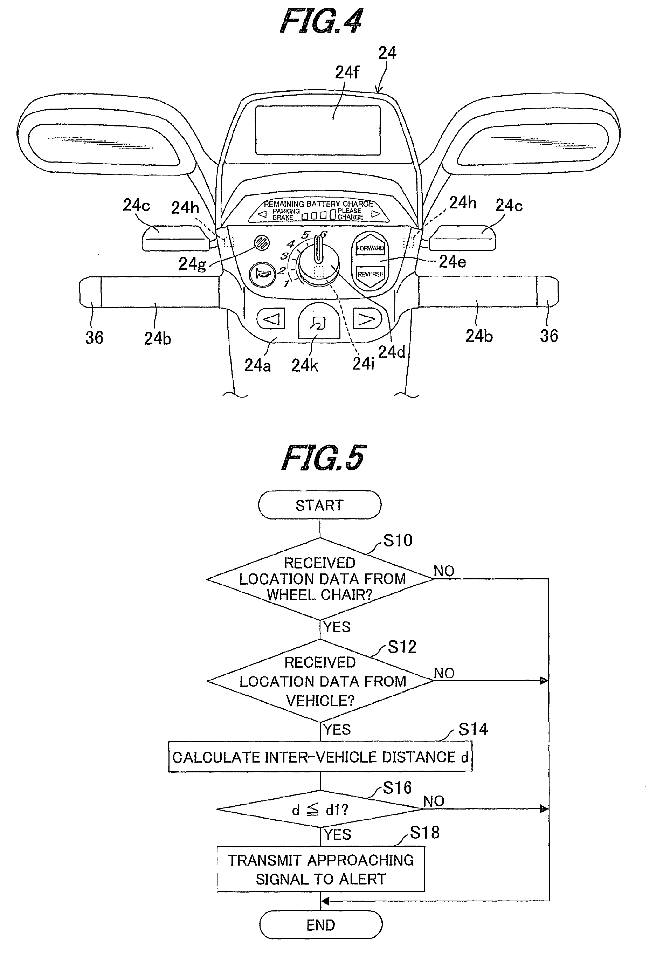

FIG. 4 is an enlarged plan view of the operating unit 24 of the power wheelchair 12 shown in FIGs. 2 and 3.

As shown in FIG. 4, the operating unit 24 is equipped with handlebars 24b that is projected to the left and right from a dashboard 24a, drive levers 24c that is also projected to the left and right for allowing the operator to input drive and stop commands, a speed setting knob 24d located on the dashboard 24a to enable the operator to set stepless speed between, for example, 1 km/h and 6 km/h, a forward-reverse switch 24e for allowing the operator to input power wheelchair 12 travel direction commands (forward and reverse commands) for switching the direction of travel between forward and reverse, a display (informing member) 24f located to be visible to the operator, and a buzzer (informer) 24g.

Drive switches 24h are installed near the drive levers 24c to output signals indicating drive commands and stop commands inputted by the operator through the drive levers 24c. A speed setting knob sensor 24i is installed near the speed setting knob 24d to produce an output or signal proportional to the speed set by the operator through the speed setting knob 24d.

The operating unit 24 is further provided with an electronic keyport 24k. When the operator brings a non-contact electronic key (IC card, not shown) near or close to the electronic keyport 24k, the electronic keyport 24k reads authentication data from the memory of the electronic key, uses the authentication data to authenticate whether the electronic key is valid, and when valid, allows the power wheelchair 12 to be started. This configuration is made for preventing theft of the power wheelchair 12, by providing an immobility feature that permits supply of starting current from the battery 30 to the motor 26 only when a valid electronic key is brought near the electronic keyport 24k. However, as this feature is not directly related to this invention, no further explanation will be given here.

As shown in FIGs. 2 to 4, a plurality of, i.e., six lamps (light-emitting diodes (LEDs); informer) 36 are provided at suitable locations on the front, back and opposite sides of the power wheelchair 12, namely at locations visible to the operator of the power wheelchair 12 and/or the driver of the vehicle 14 (particularly the latter). The six lamps 36 are deployed one on the front of the power wheelchair 12 near the operating unit 24, one on the back of the backrest of the seat 22, one on the tip of each of the left and right handlebars 24b projecting from the operating unit 24, and one on each of the left and right sides of the body frame 20.

The explanation of the power wheelchair 12 will be continued with reference to FIG. 1. The communication unit 34 is equipped with an electronic control unit (ECU) 40 for communication control (communication ECU), long-range communication equipment (first transmitter) 42 connected to the communication ECU 40, and short-range communication equipment (third transmitter) 44.

The communication ECU 40 comprises a microcomputer having a CPU, ROM, RAM and other components, none of which is shown. The communication ECU 40 is supplied with the output of the GPS signal receiver 32 (power wheelchair 12 location data) and other outputs.

The long-range communication equipment 42, which has a transceiving antenna 42a, operates in accordance with instructions from the communication ECU 40 to transmit power wheelchair 12 location data through a long-range wireless communication network (first communicator) 46 to the remote monitoring device 16 installed at an appropriate place (e.g., the company manufacturing or marketing the power wheelchair 12) and also receives approaching signals (explained later) sent from the remote monitoring device 16. The long-range wireless communication network 46 is a wireless communication network using a mobile phone frequency in the vicinity of 800 MHz and is excellent in communication reliability.

The short-range communication equipment 44, which is equipped with a transceiving antenna 44a, operates in accordance with instructions from the communication ECU 40 to transmit power wheelchair 12 location data through a short-range wireless communication network (second communicator) 50 to the vehicle 14 and, as explained later, also receives vehicle 14 location data transmitted from the vehicle 14. The short-range wireless communication network 50 is a wireless communication network that utilizes microwave communication superior to the long-range wireless communication network 46 in communication responsiveness (with low susceptibility to communication delays and similar inconveniences), specifically that uses a frequency in the vicinity of 5.8 GHz.

The power wheelchair 12 is also equipped with an ECU 52 for motor control (motor ECU) and an ECU 54 for display control (display ECU), each comprises a microcomputer having a CPU, ROM, RAM and the like (not shown). The ECUs 52 and 54 are communicatably connected to the communication ECU 40 through a controller area network (CAN).

The motor ECU 52 receives the outputs of the forward-reverse switch 24e, drive switch 24h, speed setting knob sensor 24i, etc. and controls the operation of the motor 26 and driving of the power wheelchair 12 based on these outputs. The display ECU 54 is connected to the display 24f and controls its operation to display thereon the fact that the vehicle 14 is approaching, for example.

The vehicle 14 will be explained next. The vehicle 14 is equipped with an onboard navigation device 56 for guiding the vehicle 14 along a path to its destination.

The navigation device 56 comprises a microcomputer (abbreviated as MC in the drawing) 60 equipped with a CPU, ROM, RAM, etc., (none shown) for performing data processing, a GPS signal receiver 62 for receiving GPS signals, a map database 64 for storing route guidance map data, a display (informer) 66 for displaying map data and the like stored in the map database 64, a voice output device (informer) 70 for providing voice route guidance, long-range communication equipment (first transmitter) 72 communicatably connected to the remote monitoring device 16 through the long-range wireless communication network 46, and short-range communication equipment (third transmitter) 74 communicatably connected to the power wheelchair 12 through the short-range wireless communication network 50.

The GPS signal receiver 62 receives GPS signals and sends an output indicating vehicle 14 location and other data obtained from the received GPS signals to the microcomputer 60. The microcomputer 60 determines the current location (latitude, longitude and altitude) of the vehicle 14 by a known autonomous navigation method using the vehicle 14 location data and acceleration signals from a gyrosensor (not shown).

The microcomputer 60 searches the map data to retrieve a route from the current location of the vehicle 14 to the destination, displays the retrieved route together with the map data on the display 66, and activates the voice output device 70 to output voice route guidance for enabling the operator of the vehicle 14 to follow the retrieved route, specifically to produce vocal utterances such as "100 meters ahead, turn right."

The long-range communication equipment 72, which has a transceiving antenna 72a, operates in accordance with instructions from the microcomputer 60 to transmit vehicle 14 location data through the long-range wireless communication network 46 to the remote monitoring device 16 and also receives approaching signals sent from the remote monitoring device 16.

The short-range communication equipment 74, which has a transceiving antenna 74a, operates in accordance with instructions from the microcomputer 60 to transmit vehicle 14 location data through the short-range wireless communication network 50 to the power wheelchair 12 and also receives power wheelchair 12 location data transmitted from the power wheelchair 12.

The remote monitoring device 16 is equipped with a microcomputer (server) 80 having a CPU, ROM, RAM and the like (none shown) and long-range communication equipment (second transmitter) 82. The long-range communication equipment 82 is equipped with a transceiving antenna 82a for exchanging signals (power wheelchair 12 and vehicle 14 location data, and approaching signals) with the transceiving antennas 42a and 72a of the power wheelchair 12 and vehicle 14.

Next, the operation of the monitoring system 10 configured as set out in the foregoing will be explained.

FIG. 5 is a flowchart showing the operation of the remote monitoring device 16 that is a constituent of the monitoring system 10, specifically the operation of the microcomputer 80 of the remote monitoring device 16. The program of this flowchart is repeatedly executed at regular intervals (e.g. every 10 milliseconds).

First, in S10, it is determined whether power wheelchair 12 location data transmitted by the power wheelchair 12 was received. When the result in S10 is YES, the program proceeds to S12, in which it is determined whether vehicle 14 location data transmitted by the vehicle 14 was received.

When the result in S12 is YES, the program proceeds to S14, in which the inter-vehicle distance d between the power wheelchair 12 and vehicle 14 is calculated based on the location data received from the power wheelchair 12 and vehicle 14. Next, in S16, it is determined whether the calculated inter-vehicle distance d is equal to or less than a first predetermined value d1. The first predetermined value d1 is defined as an inter-vehicle distance within which the operators of the power wheelchair 12 and vehicle 14 need to be particularly cautious because their vehicles are approaching near each other. Typically, the first predetermined value d1 is defined as 300 meters, for example.

When the result in S16 is NO, the power wheelchair 12 and vehicle 14 are not close to each other, so the program is terminated, and when it is YES, the program proceeds to S18, in which approaching signals indicating that the power wheelchair 12 and vehicle 14 are approaching each other are transmitted through the long-range wireless communication network 46 to the power wheelchair 12 and the vehicle 14, thereby alerting the operators of both. When the result in S10 or S12 is NO, the ensuing processing steps are skipped.

The operation of the power wheelchair 12 will be explained next.

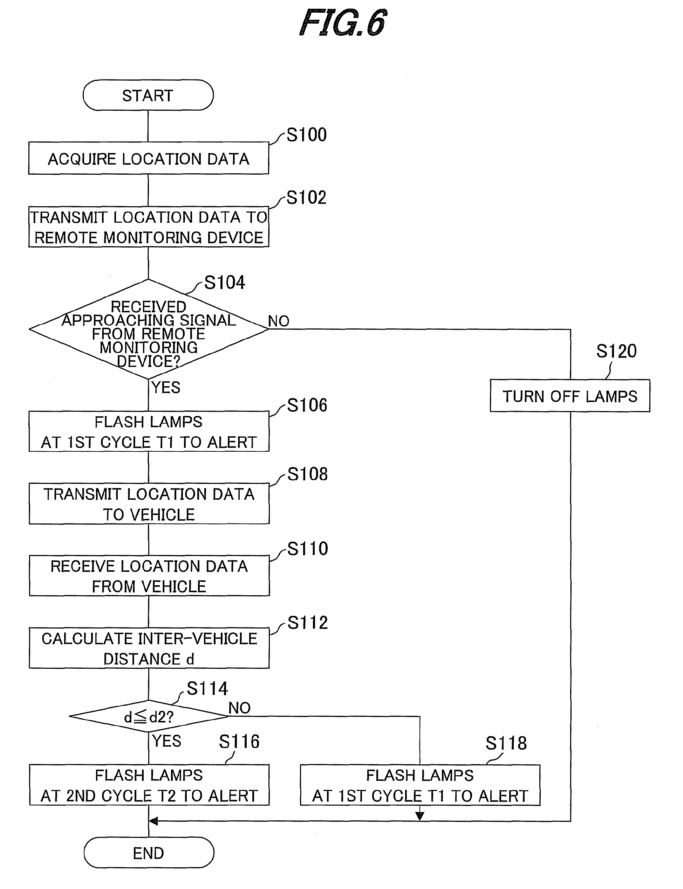

FIG. 6 is a flowchart showing the operation of the power wheelchair 12, specifically the operation of the communication ECU 40 of the power wheelchair 12. The communication ECU 40 repeatedly executes the program of this flowchart at regular intervals (e.g. every 10 milliseconds).

First, in S100, power wheelchair (subject vehicle) 12 location data is acquired (detected) from the output of the GPS signal receiver 32, whereafter the program proceeds to S102, in which the acquired power wheelchair 12 location data is transmitted through the long-range wireless communication network 46 to the remote monitoring device 16.

Next, in S104, it is determined whether an approaching signal transmitted by the remote monitoring device 16 was received, i.e., it is determined whether the remote monitoring device 16 transmitted an approaching signal to the power wheelchair 12 upon determining proximity between the power wheelchair 12 and vehicle 14.

When the result in S104 is YES, the program proceeds to S106, in which the lamps 36 are flashed on and off to alert the operator of the power wheelchair 12 that it and the vehicle 14 are approaching each other. The flashing of the lamps 36 also makes the presence of the power wheelchair 12 easier for the operator of the vehicle 14 to notice (discern visually). The flashing of the lamps 36 in this situation is performed at a relatively long cycle time (e.g., 500 milliseconds, hereinafter called "first cycle time T1").

Next, the program proceeds to S108, in which the subject vehicle (power wheelchair 12) location data is transmitted from the short-range communication equipment 44 to the vehicle 14 through the short-range wireless communication network 50, and to S110, in which the vehicle 14 location data transmitted from the vehicle 14 through the short-range wireless communication network 50 as set out later is received. Thus, upon receiving the approaching signal, the power wheelchair 12 transmits its own location data directly to the vehicle 14.

Next, the program proceeds to S112, in which the inter-vehicle distance d between the power wheelchair 12 and the vehicle 14 is calculated based on the location data of the power wheelchair 12 itself and the vehicle 14 location data received from the vehicle 14, and to S114, in which it is determined whether the calculated inter-vehicle distance d is equal to or less than a second predetermined value d2 (e.g., 100 meters) that is set smaller than the first predetermined value d1.

When the result in S114 is YES, the program proceeds to S116, in which the lamps 36 are flashed at a second cycle time T2 (e.g., 200 milliseconds) that is set shorter than the first cycle time T1, the display 24f is operated to display a warning such as "Vehicle Approaching", and the buzzer 24g is operated to sound, thereby alerting the operator of the power wheelchair 12 that the vehicle 14 is now even closer. Instead of issuing the alert through both the display 24f and the buzzer 24g, it is possible to issue it through only one of them.

On the other hand, when the result in S114 is NO, the program proceeds to S118, in which the flashing cycle time of the lamps 36 is maintained at the first cycle time T1 if that is the current cycle time or switched to the first cycle time T1 if the cycle time was the second cycle time T2 in the preceding program.

When the result in S104 is NO, i.e., when no approaching signal was received from the remote monitoring device 16 or reception of an approaching signal ceased because the power wheelchair 12 and vehicle 14 moved apart, the program proceeds to S120, in which the lamps 36 are turned off if they were flashing in the preceding program, whereafter the program is terminated.

The operation of the vehicle 14 will be explained next.

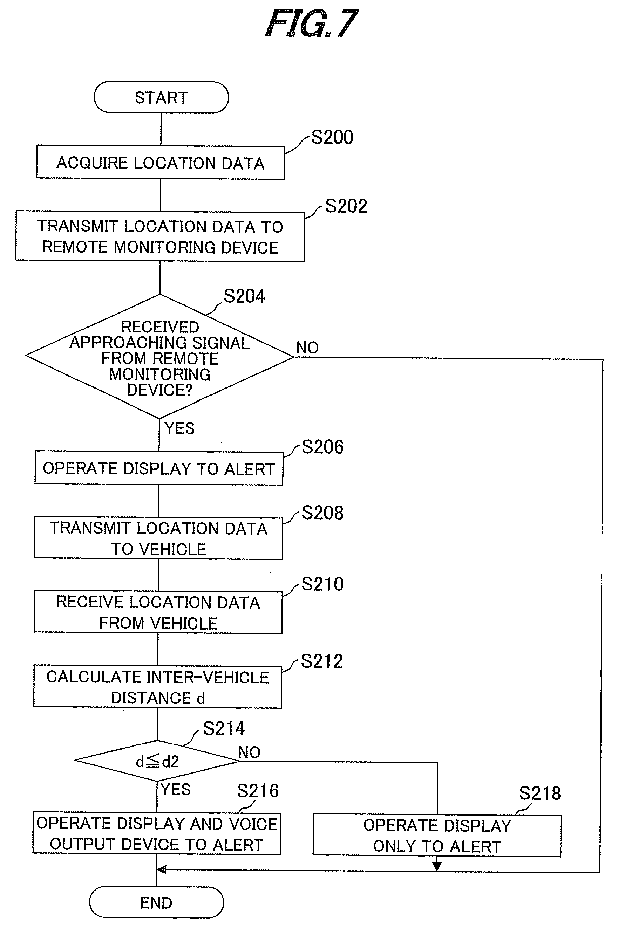

FIG. 7 is a flowchart showing the operation of the vehicle 14, specifically the operation of the microcomputer 60 of the vehicle 14. The program of this flowchart is repeatedly executed at regular intervals (e.g. every 10 milliseconds).

First, in S200, vehicle (subject vehicle) 14 location data is acquired (detected) from the output of the GPS signal receiver 62, whereafter the program proceeds to S202, in which the vehicle 14 location data is transmitted through the long-range wireless communication network 46 to the remote monitoring device 16.

Next, in S204, it is determined whether an approaching signal transmitted by the remote monitoring device 16 was received (whether the remote monitoring device 16 transmitted an approaching signal). When the result in S204 is NO, the ensuing processing steps are skipped, and when it is YES, the program proceeds to S206, in which a warning such as "Power Wheelchair Approaching" is displayed on the display 66, thereby alerting the operator of the vehicle 14 that the power wheelchair 12 is nearby.

Next, the program proceeds to S208, in which the subject vehicle (vehicle 14) location data is transmitted from the short-range communication equipment 74 to the power wheelchair 12 through the short-range wireless communication network 50, and to S210, in which the power wheelchair 12 location data mentioned regarding S110 transmitted from the power wheelchair 12 through the short-range wireless communication network 50 is received. Thus, upon receiving the approaching signal, the vehicle 14 transmits its own location data directly to the power wheelchair 12, similarly to the power wheelchair 12.

Next, the program proceeds to S212, in which the inter-vehicle distance d between the vehicle 14 and power wheelchair 12 is calculated based on the location data of the vehicle 14 itself and the power wheelchair 12 location data received from the power wheelchair 12, and to S214, in which it is determined whether the calculated inter-vehicle distance d is equal to or less than the second predetermined value d2 (e.g., 100 m).

When the result in S214 is YES, the program proceeds to S216, in which the display 66 is operated to display a warning such as "Caution. Power Wheelchair Nearby." and/or the voice output device 70 is operated to voice, thereby alerting the operator of the vehicle 14 that the power wheelchair 12 is now even closer.

When the result in S214 is NO, the program proceeds to S218, in which use of the voice output device 70 to alert the operator of the approach of the power wheelchair 12, if implemented in the preceding program loop, is discontinued and the alert mode is switched to the posting of the warning on the display 66 only.

As stated above, this embodiment is configured to have a system for monitoring a low-speed mobility vehicle (power wheelchair 12) and a vehicle of different type (14) from the low-speed mobility vehicle, and having a remote monitoring device (16) adapted to be connected to the low-speed mobility vehicle (12) and the vehicle of different type (14) through a first communicator (long-range wireless communication network 46), **characterized in that**: each of the low-speed mobility vehicle (12) and the vehicle of different type (14) includes: a first transmitter (long-range communication equipment 42, 72, communication ECU 40, S102, microcomputer 60, S202) that transmits vehicle location data to the remote monitoring device through the first communicator; and the remote monitoring device (16) includes: a first distance calculator (S14) that calculates an inter-vehicle distance (d) between the low-speed mobility vehicle (12) and the vehicle of different type (14) based on the vehicle location data transmitted from the low-speed mobility vehicle (12) and the vehicle of different type (14); and a second transmitter (long-range communication equipment 82, S16, S18) that transmits an approaching signal to the low-speed mobility vehicle (12) and the vehicle of different type (14) through the first communicator indicating that the vehicles (12, 14) are approaching each other when the inter-vehicle distance (d) calculated by the first distance calculator is equal to or less than a first predetermined value (d1).

Owing to this configuration, the operators of the low-speed mobility vehicle (power wheelchair) 12 and the operator of the vehicle 14 can both perceive that their vehicles are approaching one another, not only visually but also from the warnings they receive from the remote monitoring device 16. This lightens the burden on the operators during driving and also improves driving safety.

In the system, each of the low-speed mobility vehicle (12) and the vehicle of different type (14) includes: an informer (lamp 36, display 24f, buzzer 24g, display 66, voice output device 70, communication ECU 40, S106, S116, S118, microcomputer 60, S206, S216, S218) that informs an operator that the vehicles (12, 14) are approaching each other when receiving the approaching signal from the remote monitoring device.

When the remote monitoring device 16 transmits approaching signals to both the low-speed mobility vehicle (power wheelchair) 12 and the vehicle 14, the operators of the power wheelchair 12 and vehicle 14 can each reliably be made aware that the two vehicles are approaching each other because the vehicles are equipped with the informers that inform the respective operators of the proximity of their vehicles (the power wheelchair 12 with the lamps 36, display 24f and buzzer 24g, and the vehicle 14 with the display 66 and voice output device 70).

In the system, the low-speed mobility vehicle (12) and the vehicle of different type (14) are connected with each other through a second communicator (short-range wireless communication network 50), and each of the low-speed mobility vehicle (12) and the vehicle of different type (14) includes: a third transmitter (short-range communication equipment 44, 74, communication ECU 40, S108, microcomputer 60, S208) that transmits the vehicle location data to the other (12 or 14) of the vehicles (12, 14) through the second communicator when receiving the approaching signal from the remote monitoring device; and a second distance calculator (communication ECU 40, S112, microcomputer 60, S212) that calculates the inter-vehicle distance (d) between the low-speed mobility vehicle (12) and the vehicle of different type (14) based on the location data transmitted from the other (12 or 14) of the vehicles (12, 14); and the informer informs the operator that the vehicles (12, 14) are further approaching each other when the inter-vehicle distance (d) calculated by the second distance calculator is equal to or less than a second predetermined value (d2) that is set smaller than the first predetermined value (d1, S114, S11, S214, S216).

Thus, when the power wheelchair 12 and vehicle 14 receive the approaching signals, each transmits its location data directly to the other. This configuration minimizes susceptibility to the effects of communication delays. Moreover, the power wheelchair 12 and vehicle 14 each uses the location data received from the other to calculate the inter-vehicle distance d between itself and the other, and the informers inform the operators that their vehicles are approaching near one another when the calculated inter-vehicle distance d is equal to or less than the second predetermined value d2. This configuration further enhances driving safety.

In the system, the informer of the low-speed mobility vehicle (12) includes a lump (36) that is flashed to inform the operators of the vehicles (12, 14) that the vehicles are approaching each other. This can surely make the operator of the power wheelchair 12 aware that the two vehicles are approaching each other, and also can make the operator of the vehicle 14 visibly aware that the two vehicles are approaching each other.

In the system, the informer of the low-speed mobility vehicle (12) flashes the lamp (36) at a first cycle (T1) when receiving the approaching signal from the remote monitoring device (S104, S106), and flashes the lamp (36) at a second cycle (T2) that is set shorter than the first cycle when the inter-vehicle distance (d) calculated by the second distance calculator is equal to or less than the second predetermined value (d2, S114, S116).

In the system, the informer of the vehicle of different type (14) includes a display (66, microcomputer 60, S206, S216, S218) that is operated to inform the operator that the vehicles (12, 14) are approaching each other.

In the system, the informer of the vehicle of different type (14) operates the display when receiving the approaching signal from the remote monitoring device (S204, S206), and operates the display and a voice output device (70) when the inter-vehicle distance (d) calculated by the second distance calculator is equal to or less than the second predetermined value (d2, S214, S216).

In the system, the low-speed mobility vehicle (12) comprises a power wheelchair, and the informer of the low-speed mobility vehicle (12) includes a plurality of lamps (36) provided at locations visible to the operators of the low-speed mobility vehicle (12) and the vehicle of different type (14).

Although in the configuration explained in the foregoing, the power wheelchair 12 and vehicle 14 are communicatably connected to the remote monitoring device 16 through the long-range communication equipment 42 and 72, this is not a limitation and it is possible instead adopt a configuration that uses mobile telephones possessed by the operators (driver) in place of the long-range communication equipment 42 and 72. Specifically, the mobile telephones can be connected to the communication ECU 40 and microcomputer 60 through short-range wireless communication or the like and transmit the location data of each vehicle from the associated mobile telephone to the remote monitoring device 16.

In a monitoring system of a power wheelchair (low-speed mobility vehicle 12) and an automobile (vehicle of different type 14) having a remote monitoring device (16) connected to them through a first communicator (46), each of the wheelchair and automobile includes a first transmitter (42, 72) transmitting location data to the remote monitoring device through the first communicator, and the remote monitoring device calculates an inter-vehicle distance between the wheelchair (12) and automobile (14) based on the location data and transmits an approaching signal indicating that they are approaching each other when the inter-vehicle distance is equal to or less than a first predetermined value, thereby reducing the driving burden on the operators and enhances driving safety.

## Claims

1. A system for monitoring a low-speed mobility vehicle (12) and a vehicle of different type (14) from the low-speed mobility vehicle, and having a remote monitoring device (16) adapted to be connected to the low-speed mobility vehicle (12) and the vehicle of different type (14) through a first communicator (46),
**characterized in that**:
each of the low-speed mobility vehicle (12) and the vehicle of different type (14) includes:
a first transmitter (42, 72, 40, S102, 60, S202) that transmits vehicle location data to the remote monitoring device through the first communicator,
and the remote monitoring device (16) includes:
a first distance calculator (S14) that calculates an inter-vehicle distance (d) between the low-speed mobility vehicle (12) and the vehicle of different type (14) based on the vehicle location data transmitted from the low-speed mobility vehicle (12) and the vehicle of different type (14); and
a second transmitter (82, S16, S18) that transmits an approaching signal to the low-speed mobility vehicle (12) and the vehicle of different type (14) through the first communicator indicating that the vehicles (12, 14) are approaching each other when the inter-vehicle distance (d) calculated by the first distance calculator is equal to or less than a first predetermined value (d1).

2. The system according to claim 1, wherein each of the low-speed mobility vehicle (12) and the vehicle of different type (14) includes:
an informer (36, 24f, 24g, 66, 70, 40, S106, S116, S118, 60, S206, S216, S218) that informs an operator that the vehicles (12, 14) are approaching each other when receiving the approaching signal from the remote monitoring device.

3. The system according to claim 2, wherein the low-speed mobility vehicle (12) and the vehicle of different type (14) are connected with each other through a second communicator (50), and
each of the low-speed mobility vehicle (12) and the vehicle of different type (14) includes:
a third transmitter (44, 74, 40, S108, 60, S208) that transmits the vehicle location data to the other (12 or 14) of the vehicles (12, 14) through the second communicator when receiving the approaching signal from the remote monitoring device; and
a second distance calculator (40, S112, 60, S212) that calculates the inter-vehicle distance (d) between the low-speed mobility vehicle (12) and the vehicle of different type (14) based on the location data transmitted from the other of the vehicles (12, 14);
and the informer informs the operator that the vehicles (12, 14) are further approaching each other when the inter-vehicle distance (d) calculated by the second distance calculator is equal to or less than a second predetermined value (d2) that is set smaller than the first predetermined value (d1, S114, S11, S214, S216).

4. The system according to claim 2 or 3, wherein the informer of the low-speed mobility vehicle (12) includes a lump (36) that is flashed to inform the operators of the vehicles (12, 14) that the vehicles are approaching each other.

5. The system according to claim 4, wherein the informer of the low-speed mobility vehicle (12) flashes the lamp (36) at a first cycle (T1) when receiving the approaching signal from the remote monitoring device (S104, S106), and flashes the lamp (36) at a second cycle (T2) that is set shorter than the first cycle when the inter-vehicle distance (d) calculated by the second distance calculator is equal to or less than the second predetermined value (d2, S114, S116).

6. The system according to claim 2 or 3, wherein the informer of the vehicle of different type (14) includes a display (66, 60, S206, S216, S218) that is operated to inform the operator that the vehicles (12, 14) are approaching each other.

7. The system according to claim 6, wherein the informer of the vehicle of different type (14) operates the display when receiving the approaching signal from the remote monitoring device (S204, S206), and operates the display and a voice output device (70) when the inter-vehicle distance (d) calculated by the second distance calculator is equal to or less than the second predetermined value (d2, S214, S216).

8. The system according to any of claims 1 to 7, wherein the low-speed mobility vehicle (12) comprises a power wheelchair.

9. The system according to any of claim 2 to 8, wherein the informer of the low-speed mobility vehicle (12) includes a plurality of lamps (36) provided at locations visible to the operators of the low-speed mobility vehicle (12) and the vehicle of different type (14).
